# EUROPEAN PATENT APPLICATION

(11) **EP 4 697 413 A1**
(43) Date of publication of application: **18.02.2026**
(21) Application number: 24787739.2
(22) Date of filing: 10.01.2024
(51) Int. Cl.: H01M 4/58, H01M 10/0525, C01G 45/00, C01G 49/00, C01G 51/00, C01G 53/00, C01G 3/00, C01G 9/00

(54) **PURE-PHASE POLYANIONIC SULFATE SODIUM ION BATTERY POSITIVE ELECTRODE MATERIAL AND PREPARATION METHOD THEREFOR**

(30) Priority: 13.04.2023 CN 202310388652
(71) Applicant: Shenzhen Janaenergy Technology Co., Ltd., Shenzhen, Guangdong 518100 (CN)
(72) Inventor: ZHAO, Along, Shenzhen, Guangdong 518100 (CN); CAO, Yuliang, Shenzhen, Guangdong 518100 (CN); ZHU, Yong, Shenzhen, Guangdong 518100 (CN)
(74) Representative: Cueto, Sénida
(86) International application number: PCT/CN2024/071510
(87) International publication number: WO 2024/212632

(57) **Abstract**

Disclosed are a pure-phase polyanionic sulfate sodium ion battery positive electrode material and a preparation method therefor. The chemical general formula of the pure-phase polyanionic sulfate sodium ion battery positive electrode material is NaₓM_{y}A_{z}SO₄, wherein M is one or two or more of Mn, Fe, Co, Ni, Cu, and/or Zn, A is one or two or more of Li, K, and/or Na, and the value ranges of variables are: 0.75 ≤ x ≤ 0.85, 0.52 ≤ y ≤0.58, 0 < z ≤0.1, and x + 2y + z = 2. The pure-phase polyanionic sulfate sodium ion battery positive electrode material has the characteristics of good structural stability, excellent rate performance, good cycle performance, simple preparation method, and low cost.

## Description

### TECHNICAL FIELD

The present disclosure relates to the technical field of sodium-ion batteries, and in particular to a pure-phase polyanionic sulfate sodium ion battery positive electrode material and a preparation method therefor.

### BACKGROUND

The implementation of the carbon peaking and carbon neutrality goals has promoted the rapid development of the new energy industry. In recent years, new energy electric vehicles have become popular year by year, and the rapid growth in new energy electric vehicles has been accompanied by advancements in secondary battery technologies. Due to their mature technology and high energy conversion efficiency, secondary batteries have become an ideal choice for power and energy storage applications at present. Secondary batteries have various types, including lead-acid batteries, nickel-metal hydride batteries, nickel-cadmium batteries, alkaline zinc-manganese batteries, and lithium-ion/sodium-ion batteries. However, lithium-ion/sodium-ion batteries are undoubtedly the mainstream option for the future of the new energy sector due to their process maturity, environmental adaptability, and energy conversion efficiency,.

Nevertheless, lithium-ion batteries rely heavily on lithium resources, which are limited in reserves and may not support the low-cost requirements of energy storage in the long term. In contrast, sodium is more abundant and cost-effective. Sodium-ion batteries operate upon the same principle as lithium-ion batteries, and are considered a promising alternative with the potential to partially replace them.

Currently, the main positive electrode materials for sodium-ion batteries include layered oxides, Prussian blue and its analogs, and polyanionic materials, each of which presents distinct advantages and disadvantages. For example, layered oxides often undergo multiple phase transitions during the redox-driven sodium intercalation/deintercalation, resulting in structural collapse and poor cycling stability of the material. During the synthesis of Prussian blue-based materials, a large amount of lattice water is incorporated into their structures, which decomposes at high potentials and generates gases, causing battery swelling and failure.

Compared with the above two types of materials, polyanionic materials exhibit promising prospects for applications in sodium-ion battery positive electrode materials due to their stable three-dimensional (3D) framework structures and excellent electrochemical performance.

Currently, the main polyanionic materials include vanadium(V)-based phosphates such as Na₃V₂(PO₄)₃ and NaVPO₄F, as well as iron(Fe)-based phosphates such as Na₂FeP₂O₇, Na₄Fe₃(PO₄)₂P₂O₇ and NaFePO₄. Although V-based phosphates have relatively high redox potentials (3.4-3.6 V) and suitable discharge capacities, V-based materials are difficult to scale up for commercial applications due to the toxicity of vanadium. In contrast, Fe-based phosphates are non-toxic, pollution-free, and cost-effective, making them feasible for large-scale application. However, Fe-based phosphates have relatively low redox potential (~3V), which results in low energy density in a battery system. Therefore, Fe-based sulfate positive electrode materials, which offer extremely low production cost and higher operating potentials, are considered among the most promising positive electrode materials for sodium-ion batteries. Nevertheless, Fe-based sulfate positive electrode materials suffer from drawbacks, such as poor electronic conductivity, strong hygroscopicity, poor storage stability, low structural stability, and suboptimal rate performance.

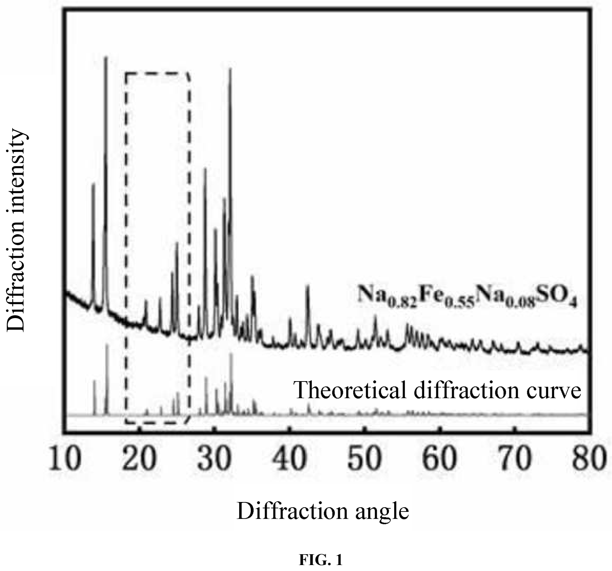

The Chinese Patent Application CN114400309A discloses a sodium-ion positive electrode material, a preparation method therefor and application thereof, aiming to address the deficiencies of existing Fe-based sulfate positive electrode materials and improve their performance. The sodium-ion positive electrode material includes a core and a coating layer formed on a surface of the core. The core includes a polyanionic sodium-ion positive electrode material having a general formula NaxMy(SO₄)₃, where M includes one or a combination of at least two of Ni, Co, Mn, Fe, Cu, or Zn; 2 ≤ x ≤ 3, 1.5 ≤ y ≤ 2, and x + 2y = 6. The coating layer includes a carbon material coated with a conductive polymer. This design improves the electronic conductivity of the material, and increases lattice parameters of the coated material, contributing to structural stability, and effectively improving the capacity, rate capability, and cycling performance of the sodium-ion positive electrode material. However, in terms of its lattice system, the disclosed polyanionic sodium-ion positive electrode material belongs to a monoclinic system, space group Pnma. Although the material exhibits good crystallinity, it also contains a significant amount of impurities. As shown in FIG. 1 of its XRD pattern, multiple diffraction peaks appear in a 2θ range of 20-24° (two main theoretical diffraction peaks). Further research indicates that some of the peaks (those at 21° and 23°) originate from an impurity phase of Na₆Fe(SO₄)₄. The presence of the impurity indicates an imbalance in the ratio of Na, Fe, and SO₄. Moreover, the presence of the impurity reduces a proportion of active material content, which is not conducive to the utilization of capacity per gram, and also makes the discharge potential, rate performance, and cycling stability uncertain due to the unpredictability of impurities. These drawbacks are detrimental to the actual large-scale production and application of the material.

### SUMMARY

Objectives of the present disclosure are to provide a pure-phase polyanionic sulfate sodium ion battery positive electrode material and a preparation method therefor, and the material has the characteristics of good structural stability, excellent rate performance, good cycle performance, simple preparation method, and low cost.

The present disclosure can be implemented through the following technical solutions:
The present disclosure provides a pure-phase polyanionic sulfate sodium ion battery positive electrode material. A chemical general formula of the pure-phase polyanionic sulfate sodium ion battery positive electrode material is NaxMyAzSO4, where M is one or two or more of Mn, Fe, Co, Ni, Cu, and/or Zn, A is one or two or more of Li, K, and/or Na, and value ranges of variables are: 0.75 ≤ x ≤ 0.85, 0.52 ≤ y ≤ 0.58, 0 < z ≤ 0.1, and x + 2y + z = 2.

Further, a lattice system of the pure-phase polyanionic sulfate sodium ion battery positive electrode material is a triclinic system with a P2₁/c space group.

Further, for site occupation, Na, S, and O occupy 4e sites, while M and A occupy 8f sites; and Na/S-O₄ form tetrahedra, M/A-O₆ form octahedra, and the tetrahedra and the octahedra are interconnected by sharing vertices/faces.

Further, in the triclinic system with a P2₁/c space group, lattice parameters vary within the following ranges: 11.10Å ≤ a ≤ 12.20Å; 11.40 Å ≤ b ≤ 12.60Å; 5.20 Å ≤ c ≤6.90Å; and 910.01Å³≤ V ≤ 940.4Å³.

Another aspect of the present disclosure is to provide a preparation method for the pure-phase polyanionic sulfate sodium ion battery positive electrode material, including the following steps: uniformly mixing a sodium source, a metal source, an alkali metal source, an anion source, and a carbon source in stoichiometric ratios to obtain a mixture, sintering the mixture in an inert atmosphere to obtain the pure-phase polyanionic sulfate sodium ion battery positive electrode material.

Further, the sodium source includes an inorganic sodium source and/or an organic sodium source. The inorganic sodium source is one or two or more of sodium hydroxide, sodium chloride, sodium sulfate, sodium nitrate, and/or sodium carbonate; and the organic sodium source is one or two or more of sodium formate, sodium acetate, sodium ethoxide, and/or sodium benzoate.

Further, the metal source is one or two or more of a manganese source, an iron source, a cobalt source, a nickel source, a copper source, and/or a zinc source. The manganese source is one or two or more of manganese sulfate, manganese carbonate, manganese chloride, and/or manganese acetate; the iron source is one or two or more of ferrous sulfate, ferric chloride, ferrous oxide, and/or ferric acetate; the cobalt source is one or two or more of cobalt sulfate, cobalt nitrate, cobalt chloride, and/or cobalt acetate; the nickel source is one or two or more of nickel sulfate, nickel nitrate, nickel chloride, and/or nickel acetate; the copper source is one or two or more of copper sulfate, copper chloride, and/or copper acetate; and the zinc source is one or two or more of zinc sulfate, zinc chloride, and/or zinc acetate. Further, the alkali metal source is a sodium source, a lithium source, and/or a potassium source.

Further, the sodium source serving as the alkali metal source includes an inorganic sodium source and/or an organic sodium source. The inorganic sodium source is one or two or more of sodium hydroxide, sodium chloride, sodium sulfate, sodium nitrate, and/or sodium carbonate; and the organic sodium source is one or two or more of sodium formate, sodium acetate, sodium ethoxide, and/or sodium benzoate. Further, the lithium source is one or two or more of lithium sulfate, lithium carbonate, and/or lithium hydroxide.

Further, the potassium source is one or two or more of potassium sulfate, potassium hydroxide, potassium chloride, potassium nitrate, and/or potassium carbonate. Further, the anion source is one or two or more of sulfuric acid, sodium sulfate, ferrous ammonium sulfate, ferrous sulfate, and/or ammonium sulfate.

Further, the carbon source is a carbon material such as Super P, Ketjen black (KB), carbon nanotubes, graphene, and one or two or more of glucose, citric acid, and/or sucrose.

Further, a method for uniformly mixing is a liquid-phase mixing method or a solid-state mixing method; the inert atmosphere is argon, nitrogen, or a mix gas of argon, hydrogen, and nitrogen; and a temperature of sintering is 200°C-400°C.

The preparation method for the pure-phase polyanionic sulfate sodium ion battery positive electrode material and preparation method therefore, which has the following beneficial effect:
a polyanionic sulfate sodium ion battery positive electrode material NaₓM_{y}A_{z}SO₄ is provided. Within the ranges of 0.75 ≤ x ≤ 0.85, 0.52 ≤ y ≤ 0.58, 0 < z ≤ 0.1, and x + 2y + z = 2, the material exhibits a single pure phase and demonstrates optimal electrochemical performance.

The material crystallizes in a triclinic system with a space group P2₁/c, where M and A occupy the same 8f sites in the structure. This configuration may effectively reduce Coulombic interaction between adjacent M-M ions, thereby improving the structural stability and facilitating faster sodium intercalation/deintercalation rates.

The material exhibits a high discharge voltage (3.7 V vs Na/Na⁺) and sodium storage capacity (110 mAh/g), excellent long-term cycling stability (100% capacity retention over 1000 cycles at a rate of 10C), and outstanding rate performance (60 mAh/g at a rate of 30C).

The preparation process of the material is simple and compatible with traditional solid-state method, liquid-phase method, and solid-liquid mixing method. Moreover, the raw materials are abundant and cost-effective.

### BRIEF DESCRIPTION OF THE DRAWINGS

FIG. 1 illustrates an X-ray diffraction (XRD) pattern of an Na_{0.82}Fe_{0.55}Na_{0.08}SO₄ material.
FIG. 2 illustrates a scanning electron microscopy (SEM) image of an Na_{0.82}Fe_{0.55}Na_{0.08}SO₄ material.
FIG. 3 illustrates a first cycle charge-discharge curve of an Na_{0.82}Fe_{0.55}Na_{0.08}SO₄ material.
FIG. 4 illustrates a rate performance curve of an Na_{0.82}Fe_{0.55}Na_{0.08}SO₄ electrode.
FIG. 5 illustrates a cycling performance curve of an Na_{0.82}Fe_{0.55}Na_{0.08}SO₄ electrode.
FIG. 6 illustrates an XRD pattern of an Na_{0.85}Fe_{0.53}Li_{0.09}SO₄ material.
FIG. 7 illustrates an XRD pattern of an Na_{0.78}Fe_{0.57}K_{0.08}SO₄ material.
FIG. 8 illustrates an XRD pattern of an Na_{0.92}Fe_{0.50}K_{0.08}SO₄ material.
FIG. 9 illustrates an XRD pattern of an Na_{0.74}Fe_{0.59}Li_{0.08}SO₄ material.
FIG. 10 illustrates a first cycle charge-discharge curve of an Na_{0.9}2Fe_{0.50}K_{0.06}SO₄/Na_{0.}74Fe_{0.59}Li_{0.08}SO₄ electrode.
FIG. 11 illustrates a cycling performance curve of an Na_{0.09}Fe_{0.50}K_{0.08}SO₄/Na_{0.74}Fe_{0.59}Li_{0.08}SO₄ electrode.

### DETAILED DESCRIPTIONS OF THE EMBODIMENTS

In order to enable those skilled in the art to better understand the technical solutions of the present disclosure, the product in the present disclosure will be further described in detail below with reference to specific embodiments and accompanying drawings.

The present disclosure provides a pure-phase polyanionic sulfate sodium ion battery positive electrode material. A chemical general formula of the pure-phase polyanionic sulfate sodium ion battery positive electrode material is NaₓM_{y}A_{z}SO₄, where M is one or two or more of Mn, Fe, Co, Ni, Cu, and/or Zn, A is one or two or more of Li, K, and/or Na, and value ranges of the variables are: 0.85 ≤ x ≤ 0.95, 0.52 ≤ y ≤ 0.58, 0 < z ≤ 0.1, and x+2y+z = 2.

Further, a lattice system of the pure-phase polyanionic sulfate sodium ion battery positive electrode material is a triclinic system with a P2₁/c space group.

Further, for site occupation, Na, S, and O occupy 4e sites, while M and A occupy 8f sites; and Na/S-O₄ form tetrahedra, M/A-O₆ form octahedra, and the tetrahedra and the octahedra are interconnected by sharing vertices/faces.

Further, in the triclinic system with a P2₁/c space group, lattice parameters vary within the following ranges: 11.10Å ≤ a ≤ 12.20Å; 11.40 Å ≤ b ≤ 12.60Å; 5.20Å ≤ c ≤ 6.90Å; and 910.01Å³≤ V ≤ 940.4Å³.

Another aspect of the present disclosure is to provide a preparation method for the pure-phase polyanionic sulfate sodium ion battery positive electrode material, including the following steps: uniformly mixing a sodium source, a metal source, an alkali metal source, an anion source, and a carbon source in stoichiometric ratios to obtain a mixture, sintering the mixture in an inert atmosphere to obtain the pure-phase polyanionic sulfate sodium ion battery positive electrode material.

Further, the sodium source includes an inorganic sodium source and/or an organic sodium source. The inorganic sodium source is one or two or more of sodium hydroxide, sodium chloride, sodium sulfate, sodium nitrate, and/or sodium carbonate; and the organic sodium source is one or two or more of sodium formate, sodium acetate, sodium ethoxide, and/or sodium benzoate.

Further, the metal source is one or two or more of a manganese source, an iron source, a cobalt source, a nickel source, a copper source, and/or a zinc source. The manganese source is one or two or more of manganese sulfate, manganese carbonate, manganese chloride, and/or manganese acetate; the iron source is one or two or more of ferrous sulfate, ferric chloride, ferrous oxide, and/or ferric acetate; the cobalt source is one or two or more of cobalt sulfate, cobalt nitrate, cobalt chloride, and/or cobalt acetate; the nickel source is one or two or more of nickel sulfate, nickel nitrate, nickel chloride, and/or nickel acetate; the copper source is one or two or more of copper sulfate, copper chloride, and/or copper acetate; and the zinc source is one or two or more of zinc sulfate, zinc chloride, and/or zinc acetate. Further, the alkali metal source is a sodium source, a lithium source, and/or a potassium source.

Further, the sodium source serving as the alkali metal source includes an inorganic sodium source and/or an organic sodium source. The inorganic sodium source is one or two or more of sodium hydroxide, sodium chloride, sodium sulfate, sodium nitrate, and/or sodium carbonate; and the organic sodium source is one or two or more of sodium formate, sodium acetate, sodium ethoxide, and/or sodium benzoate. Further, the lithium source is one or two or more of lithium sulfate, lithium carbonate, and/or lithium hydroxide.

Further, the potassium source is one or two or more of potassium sulfate, potassium hydroxide, potassium chloride, potassium nitrate, and/or potassium carbonate. Further, the anion source is one or two or more of sulfuric acid, sodium sulfate, ferrous ammonium sulfate, ferrous sulfate, and/or ammonium sulfate.

Further, the carbon source is a carbon material such as Super P, Ketjen black (KB), carbon nanotubes, graphene, and one or two or more of glucose, citric acid, and/or sucrose.

Further, a method for uniformly mixing is a liquid-phase mixing method or a solid-state mixing method; the inert atmosphere is argon, nitrogen, or a mix gas of argon, hydrogen, and nitrogen; and a temperature of sintering is 200°C-400°C.

Specifically, the liquid-phase mixing method involves dissolving the sodium source, the metal source, the alkali metal source, the anion source, and the carbon source in an organic solvent or an inorganic solvent, followed by drying to obtain a uniformly mixed precursor. A method for drying includes one or more of a high-temperature drying method (such as hot air drying, spray drying), a low-temperature drying method (such as freeze drying) and a low-pressure drying method (such as vacuum drying). The inorganic solvent is water, and the organic solvent is one or more solvents such as methanol, ethanol, and acetonitrile.

Specifically, the solid-state mixing method involves uniformly mixing raw materials such as the sodium source, the metal source, the alkali metal source, the anion source, and the carbon source through mechanical force, so as to achieve uniform mixture of the sodium source, the metal source, the alkali metal source, the anion source, and the carbon source. The mechanical force comes from sand milling, ball milling and other technology.

### Example 1

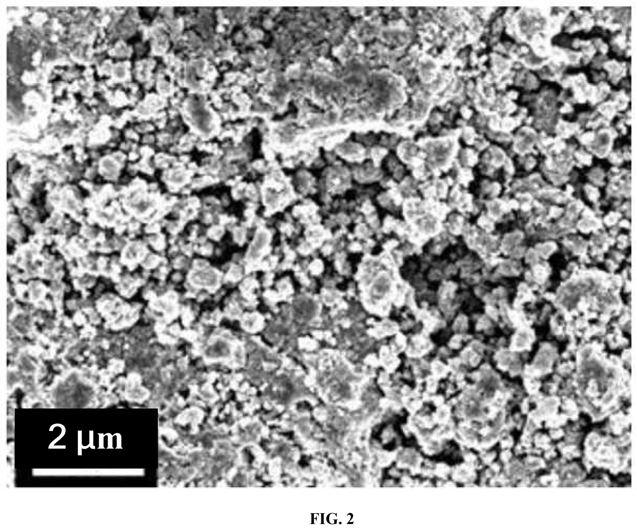

This example involves the synthesis and electrochemical performance of Na_{0.82}Fe_{0.55}Na_{0.08}SO₄, as detailed below:
Sodium hydroxide, ferrous acetate, sodium acetate, and ammonium sulfate were added to a ball-milling jar at a molar ratio of 0.82:0.55:0.05:1, KB was used as a carbon source, 20 mL of acetone was taken and poured into the ball-milling jar (under a nitrogen atmosphere), a ball-to-powder ratio was set to 20:1, and the ball milling was performed at a rotation speed of 400 r/min for a total of 7 h, with an interval of 10 min. Finally, the ball-milled precursor was heated in an Ar/H₂ (90:10) atmosphere at a heating rate of 1 °C/min to 100 °C and held for 3 h, followed by heating again at a heating rate of 1 °C/min to 200 °C and held for 3 h, and then further heated at a heating rate of 1 °C/min to 350 °C and maintained at this temperature for 5 h. After cooling to room temperature, the Na_{0.82}Fe_{0.55}Na_{0.08}SO₄ material was obtained. FIG. 1 illustrates an X-ray diffraction (XRD) pattern of Na_{0.82}Fe_{0.55}Na_{0.08}SO₄ powder. The characteristic diffraction peaks perfectly match those of the theoretically calculated pattern, indicating that the powder has a single pure phase with high crystallinity. In a pure-phase structure, ions migrate smoothly along specific crystal planes at a high rate, resulting in excellent rate performance. In addition, the pure-phase structure has a high proportion of active materials, making its capacity utilization approach the actual theoretical specific capacity. FIG. 2 illustrates morphology of an Na_{0.82}Fe_{0.55}Na_{0.08}SO₄ material, which exhibits nanoscale agglomerated particles with small particle sizes. This can effectively reduce a distance of sodium ion deintercalation process, thereby increasing a rate of deintercalation in the material.

The Na_{0.82}Fe_{0.55}Na_{0.08}SO₄, AB and PVDF were uniformly mixed in a mass ratio of 7:2:1 to obtain a mixture, the mixture was coated on aluminum foil using a 150 µm four-sided applicator to obtain an electrode film, and the electrode film was dried in a vacuum drying oven at 100°C for 2 h. The electrode film was punched into a disc with a radius of 0.6 mm using a punching machine, and a CR2016 button cell battery was assembled in a glove box by using sodium metal as a counter electrode 1 mol/L NaClO₄EC+DEC (1:1 vol%) +5% FEC as electrolyte, and a PP/PE/PP three-layer separator as a separator.

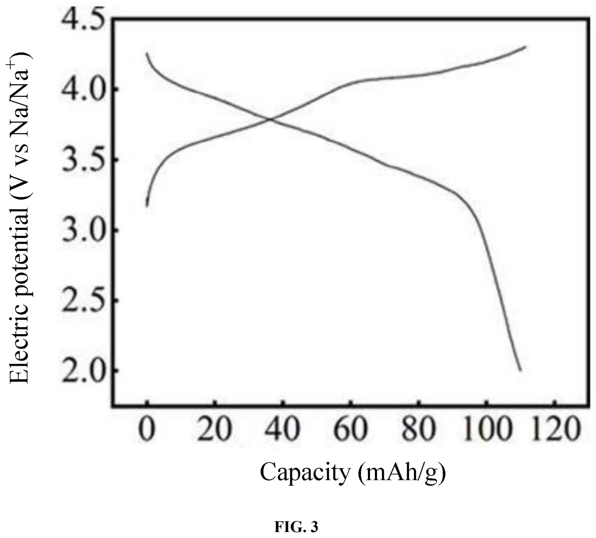

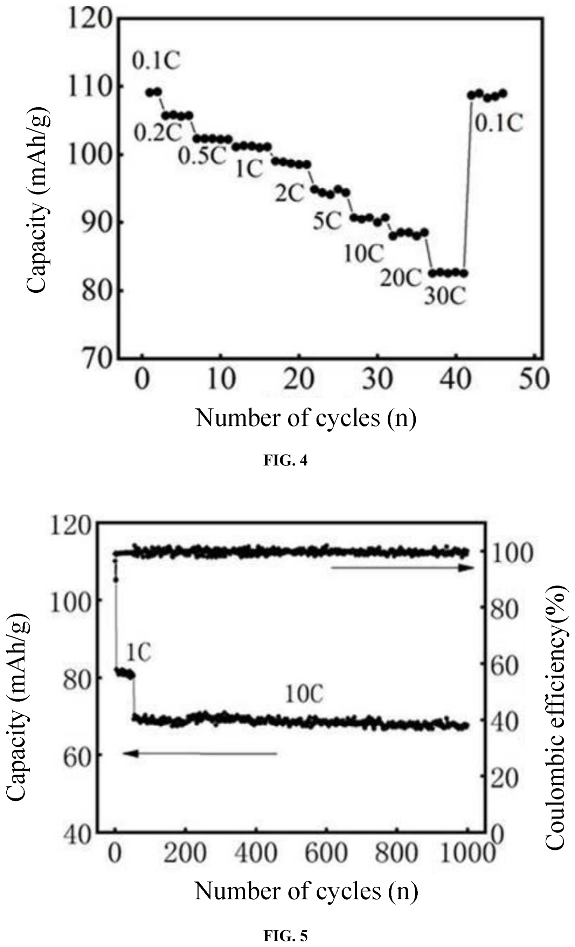

The button cell battery was subjected to a galvanostatic charge-discharge test at a current density of 0.1C (1C=100 mAh/g). FIG. 3 illustrates a first cycle charge-discharge curve of an Na_{0.82}Fe_{0.55}Na_{0.08}SO₄ electrode. Within a voltage range of 2.0-4.3 V, the electrode has a reversible specific capacity of 110 mAh/g with an average discharge potential of 3.7 V. FIG. 4 illustrates rate performance of an Na_{0.82}Fe_{0.55}Na_{0.08}SO₄. It can be seen from the figure that the material has a capacity of 60 mAh/g at a rate of 30 C. FIG. 5 illustrates the long-term cycling stability of an Na_{0.82}Fe_{0.55}Na_{0.08}SO₄. The electrode retains nearly its full capacity after 1000 cycles at a rate of 10 C, demonstrating excellent structural stability.

### Example 2

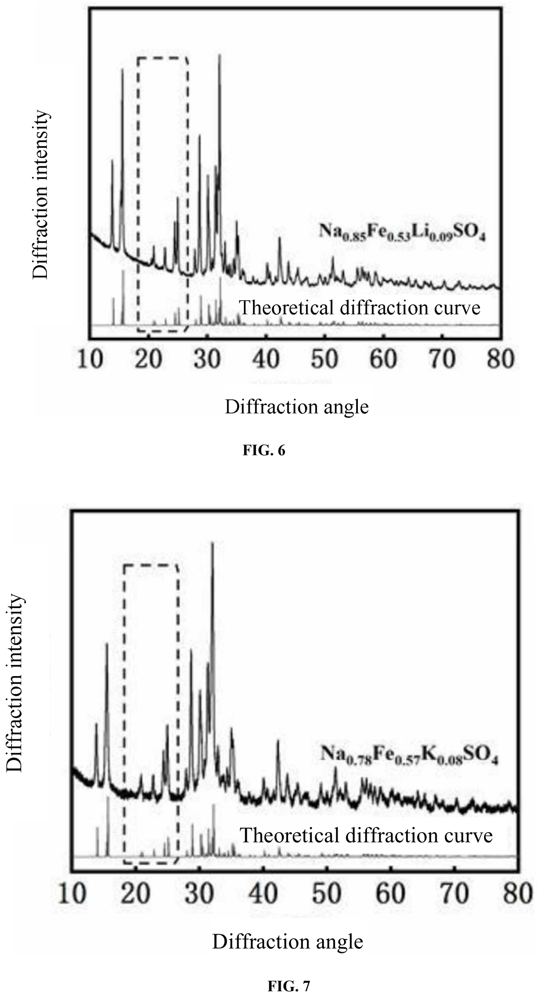

This example involves the synthesis and electrochemical performance of Na_{0.85}Fe_{0.53}Li_{0.09}SO₄, as detailed below:
Lithium sulfate, ferrous acetate, and sodium sulfate were added to a ball-milling jar at a molar ratio of 0.045:0.53:0.425, KB was used as a carbon source, 20 mL of acetone was taken and poured into the ball-milling jar (under a nitrogen atmosphere), a ball-to-powder ratio was set to 20:1, and the ball milling was performed at a rotation speed of 400 r/min for a total of 7 h, with an interval of 10 min. Finally, the ball-milled precursor was heated in an Ar/H₂ (90:10) atmosphere at a heating rate of 1 °C/min to 100 °C and held for 3 h, followed by heating again at a heating rate of 1 °C/min to 200 °C and held for 3 h, and then further heated at a heating rate of 1 °C/min to 350 °C and maintained at this temperature for 5 h. After cooling to room temperature, the Na_{0.85}Fe_{0.53}Li_{0.09}SO₄ material was obtained. FIG. 6 illustrates an X-ray diffraction (XRD) pattern of Na_{0.85}Fe_{0.53}Li_{0.09}SO₄ powder. The characteristic diffraction peaks perfectly match those of the theoretically calculated pattern, indicating that the powder has a single pure phase with high crystallinity.

The Na_{0.85}Fe_{0.53}Li_{0.09}SO₄, AB and PVDF were uniformly mixed in a mass ratio of 7:2:1 to obtain a mixture, the mixture was coated on aluminum foil using a 150 µm four-sided applicator to obtain an electrode film, and the electrode film was dried in a vacuum drying oven at 100°C for 2 h. The electrode film was punched into a disc with a radius of 0.6 mm using a punching machine, and a CR2016 button cell battery was assembled in a glove box by using sodium metal as a counter electrode 1 mol/L NaClO₄EC+DEC (1:1 vol%) +5% FEC as electrolyte, and a PP/PE/PP three-layer separator as a separator.

The button cell battery was subjected to a galvanostatic charge-discharge test at a current density of 0.1C (1C=100 mAh/g). A reversible specific capacity was 109 mAh/g over a voltage range of 2. 0-4.3 V.

### Example 3

This example involves the synthesis and electrochemical performance of Na_{0.78}Fe_{0.57}K_{0.08}SO₄, as detailed below:
Potassium sulfate, ferrous sulfate, and sodium sulfate were added to a ball-milling jar at a molar ratio of 0.04:0.285:0.39, KB was used as a carbon source, 20 mL of acetone was taken and poured into the ball-milling jar (under a nitrogen atmosphere), a ball-to-powder ratio was set to 20:1, and the ball milling was performed at a rotation speed of 400 r/min for a total of 7 h, with an interval of 10 min. Finally, the ball-milled precursor was heated in an Ar/H₂ (90:10) atmosphere at a heating rate of 1°C/min to 100 °C and held for 3 h, followed by heating again at a heating rate of 1 °C/min to 200°C and held for 3 h, and then further heated at a heating rate of 1°C/min to 350 °C and maintained at this temperature for 5 h. After cooling to room temperature, the Na_{0.78}Fe_{0.57}K_{0.08}SO₄ material was obtained. FIG. 7 illustrates an X-ray diffraction (XRD) pattern of Na_{0.78}Fe_{0.57}K_{0.08}SO₄ powder. The characteristic diffraction peaks perfectly match those of the theoretically calculated pattern, indicating that the powder has a single pure phase with high crystallinity.

The Na_{0.78}Fe_{0.57}K_{0.08}SO₄, AB and PVDF were uniformly mixed in a mass ratio of 7:2:1 to obtain a mixture, the mixture was coated on aluminum foil using a 150 µm four-sided applicator to obtain an electrode film, and the electrode film was dried in a vacuum drying oven at 100°C for 2 h. The electrode film was punched into a disc with a radius of 0.6 mm using a punching machine, and a CR2016 button cell battery was assembled in a glove box by using sodium metal as a counter electrode 1 mol/L NaClO₄EC+DEC (1:1 vol%) +5% FEC as electrolyte, and a PP/PE/PP three-layer separator as a separator.

The button cell battery was subjected to a galvanostatic charge-discharge test at a current density of 0.1C (1C=100 mAh/g). A reversible specific capacity was 112 mAh/g over a voltage range of 2. 0-4.3 V.

### Example 4

This example involves the synthesis and electrochemical performance of Na_{0.86}Fe_{0.52}K_{0.1}SO₄, as detailed below:
Sulfuric acid, sodium carbonate, ferrous oxalate, and potassium chloride were added to a flask at a molar ratio of 1.0:0.425:0.52:0.1, 50 mL of deionized water was added to the flask, glucose was used as a carbon source, and ascorbic acid was used as an antioxidant. After complete dissolution, a light green solution was obtained. The resulting solution was spray dried, an inlet temperature was set to 250 °C, a peristaltic pump speed was set to 15 r/min, and an outlet temperature was controlled at 110 °C to obtain a pure white precursor powder. Finally, the precursor powder was heated in an Ar atmosphere at a heating rate of 1°C/min to 200°C and held for 3 h, followed by heating again at a heating rate of 2°C/min to 350 °C and maintained at this temperature for 6 h. After cooling to room temperature, the black Na_{0.86}Fe_{0.52}K_{0.1}SO₄ material was obtained.

The Na_{0.86}Fe_{0.52}K_{0.1}SO₄, Super P and PVDF were uniformly mixed in a mass ratio of 8:1:1 to obtain a mixture, the mixture was coated on aluminum foil using a 200 µm four-sided applicator to obtain an electrode film, and the electrode film was dried in a vacuum drying oven at 100°C for 3 h. The electrode film was punched into a disc with a radius of 0.6 mm using a punching machine, and a CR2016 button cell battery was assembled in a glove box by using sodium metal as a counter electrode 1 mol/L NaClO₄EC+DEC (1:1 vol%) +5% FEC as electrolyte, and a glass fiber separator as a separator.

The button cell battery was subjected to a galvanostatic charge-discharge test at a current density of 0.1C (1C=100 mAh/g). A reversible specific capacity was 105 mAh/g over a voltage range of 2. 0-4.3 V.

### Example 5

This example involves the synthesis and electrochemical performance of Na_{0.83}Fe_{0.58}Li_{0.01}SO₄, as detailed below:
Ferrous sulfate, lithium carbonate, ammonium sulfate, and sodium hydroxide were added to a beaker at a molar ratio of 0.58:0.01:0.42:0.83 to obtain a mixture, 50 mL of deionized water was added to dissolve the mixture. After complete dissolution, a light green solution was obtained. The resulting solution was spray dried, an inlet temperature was set to 250 °C, a peristaltic pump speed was set to 15 r/min, and an outlet temperature was controlled at 110 °C to obtain a pure white precursor powder. The precursor powder was dried in a vacuum oven at 200°C for 10 h. The dried precursor powder was then mixed with KB and subjected to high-energy ball milling with a ball-to-material ratio of 20:1, at a frequency of 50 Hz for about 3 h. The uniformly mixed black powder was heated under a nitrogen atmosphere at a heating rate of 1°C/min to 200°C and held for 3 h, followed by heating again at a heating rate of 2°C/min to 350 °C and maintained at this temperature for 6 h. After cooling to room temperature, the black Na_{0.83}Fe_{0.58}Li_{0.01}SO₄ material was obtained.

The Na_{0.83}Fe_{0.58}Li_{0.01}SO₄, KB and PVDF were uniformly mixed in a mass ratio of 8:1:1 to obtain a mixture, the mixture was coated on aluminum foil using a 100 µm four-sided applicator to obtain an electrode film, and the electrode film was dried in a vacuum drying oven at 100°C for 3 h. The electrode film was punched into a disc with a radius of 0.6 mm using a punching machine, and a CR2016 button cell battery was assembled in a glove box by using sodium metal as a counter electrode 1 mol/L NaClO₄EC+DEC (1:1 vol%) +5% FEC as electrolyte, and a PP/PE/PP three-layer separator as a separator.

The button cell battery was subjected to a galvanostatic charge-discharge test at a current density of 0.1C (1C=100 mAh/g). A reversible specific capacity was 107 mAh/g over a voltage range of 2. 0-4.3 V.

### Example 6

This example involves the synthesis and electrochemical performance of Na_{0.86}Mn_{0.54}Na_{0.06}SO₄, as detailed below:
Manganese acetate, sodium acetate, ammonium sulfate and sodium chloride were added to a beaker at a molar ratio of 0.54:0.86:1.0:0.06 to obtain a mixture, 50 mL of deionized water was added to dissolve the mixture. After complete dissolution, a light green solution was obtained. The resulting solution was spray dried, an inlet temperature was set to 250 °C, a peristaltic pump speed was set to 15 r/min, and an outlet temperature was controlled at 110 °C to obtain a pure white precursor powder. The precursor powder was dried in a vacuum oven at 200°C for 10 h. The dried precursor powder was then mixed with KB and subjected to high-energy ball milling with a ball-to-material ratio of 20:1, at a frequency of 50 Hz for about 3 h. The uniformly mixed black powder was heated under a nitrogen atmosphere at a heating rate of 1°C/min to 200°C and held for 3 h, followed by heating again at a heating rate of 2°C/min to 350 °C and maintained at this temperature for 6 h. After cooling to room temperature, the black Na_{0.86}Mn_{0.54}Na_{0.06}SO₄ material was obtained.

The Na_{0.86}Mn_{0.54}Na_{0.06}SO₄, KB and PVDF were uniformly mixed in a mass ratio of 8:1:1 to obtain a mixture, the mixture was coated on aluminum foil using a 100 µm four-sided applicator to obtain an electrode film, and the electrode film was dried in a vacuum drying oven at 100°C for 3 h. The electrode film was punched into a disc with a radius of 0.6 mm using a punching machine, and a CR2016 button cell battery was assembled in a glove box by using sodium metal as a counter electrode 1 mol/L NaClO₄EC+DEC (1:1 vol%) +5% FEC as electrolyte, and a PP/PE/PP three-layer separator as a separator.

The button cell battery was subjected to a galvanostatic charge-discharge test at a current density of 0.1C (1C=100 mAh/g). A reversible specific capacity was 100 mAh/g over a voltage range of 2. 0-4.8V.

### Example 7

This example involves the synthesis and electrochemical performance of Na_{0.88}Co_{0.55}Li_{0.02}SO₄, as detailed below:
Sodium hydroxide, cobalt sulfate, lithium acetate, and ammonium sulfate were added to a ball-milling jar at a molar ratio of 0.88:0.55:0.02:0.45, KB was used as a carbon source, 20 mL of acetone was taken and poured into the ball-milling jar (under a nitrogen atmosphere), a ball-to-powder ratio was set to 20:1, and the ball milling was performed at a rotation speed of 400 r/min for a total of 7 h, with an interval of 10 min. Finally, the ball-milled precursor was heated in an Ar/H₂ (90:10) atmosphere at a heating rate of 1°C/min to 100°C and held for 3 h, followed by heating again at a heating rate of 1 °C/min to 200°C and held for 3 h, and then further heated at a heating rate of 1°C/min to 350 °C and maintained at this temperature for 5 h. After cooling to room temperature, the Na_{0.88}Co_{0.55}Li_{0.02}SO₄ material was obtained.

The Na_{0.88}Co_{0.55}Li_{0.02}SO₄, KB and PVDF were uniformly mixed in a mass ratio of 8:1:1 to obtain a mixture, the mixture was coated on aluminum foil using a 100 µm four-sided applicator to obtain an electrode film, and the electrode film was dried in a vacuum drying oven at 100°C for 3 h. The electrode film was punched into a disc with a radius of 0.6 mm using a punching machine, and a CR2016 button cell battery was assembled in a glove box by using sodium metal as a counter electrode 1 mol/L NaClO₄EC+DEC (1:1 vol%) +5% FEC as electrolyte, and a PP/PE/PP three-layer separator as a separator.

The button cell battery was subjected to a galvanostatic charge-discharge test at a current density of 0.1C (1C=100 mAh/g). A reversible specific capacity was 90 mAh/g over a voltage range of 2. 0-4.8V.

In the present disclosure, the pure-phase polyanionic sulfate sodium ion battery positive electrode material has a general structural formula of NaₓM_{y}A_{z}SO₄, where a value range of x is 0.85 ≤ x ≤ 0.95, a value range of y is 0.52 ≤ y ≤ 0.58, A represents alkali metal elements such as Li, K, or Na, and a value range of z is 0 < z ≤0.1, where x + 2y + z = 2. The preparation method involves uniformly mixing a sodium source, a metal source, an alkali metal source, an anion source (SO₄²⁻), and a carbon source in a specific ratio, followed by sintering in an inert atmosphere to obtain the desired material. The material has a high redox potential (3.7V vs Na/Na⁺) and excellent sodium storage capacity. Thanks to its stable 3D open-framework structure and wide sodium-ion diffusion channels, the material exhibits outstanding long-term cycling stability and excellent rate performance. Compared with other sodium-ion battery positive electrode materials, the material contains Na, Fe, alkali metals, and SO₄, which are abundant in natural resources and low mining costs. In addition, the synthesis process of NaₓM_{y}A_{z}SO₄ is simple, and the resulting material has excellent electrochemical performance. Therefore, it is expected to become a commercial sodium-ion battery positive electrode material.

### Comparative Example1

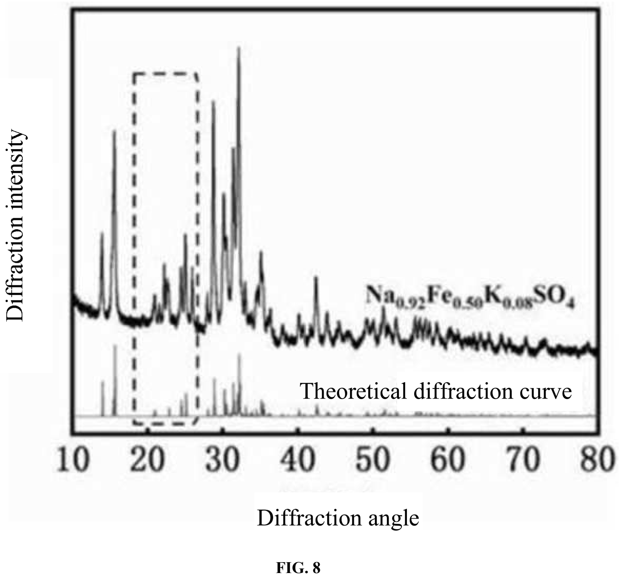

This example involves the synthesis and electrochemical performance of Na_{0.02}Fe_{0.50}K_{0.06}SO₄, as detailed below:
Sodium sulfate, ferrous sulfate, and potassium sulfate were added to a ball-milling jar at a molar ratio of 0.46:0.50:0.04, KB was used as a carbon source, 20 mL of acetone was taken and poured into the ball-milling jar (under a nitrogen atmosphere), a ball-to-powder ratio was set to 20:1, and the ball milling was performed at a rotation speed of 400 r/min for a total of 7 h, with an interval of 10 min. Finally, the ball-milled precursor was heated in an Ar/H₂ (90:10) atmosphere at a heating rate of 1°C/min to 100 °C and held for 3 h, followed by heating again at a heating rate of 1 °C/min to 200°C and held for 3 h, and then further heated at a heating rate of 1°C/min to 350 °C and maintained at this temperature for 5 h. After cooling to room temperature, the Na_{0.92}Fe_{0.50}K_{0.08}SO₄ material was obtained. FIG. 8 illustrates an X-ray diffraction (XRD) pattern of Na_{0.92}Fe_{0.50}K_{0.08}SO₄ powder. Compared with the theoretical diffraction pattern, a significant number of impurity peaks are observed in a 2θ range of 20-25°. The peaks are consistent with the diffraction peaks of the Na₆Fe(SO₄)₄ impurity phase, indicating an imbalance in the stoichiometric ratios of elements such as Na, Fe, and SO₄. On the one hand, the presence of the impurity phase reduces the proportion of active material, resulting in a lower specific capacity. On the other hand, the presence of impurities is not conducive to diffusion of ion at a material interface, resulting in increased electrode polarization and degraded rate performance.

The Na_{0.92}Fe_{0.50}K_{0.08}SO₄, AB and PVDF were uniformly mixed in a mass ratio of 7:2:1 to obtain a mixture, the mixture was coated on aluminum foil using a 150 µm four-sided applicator to obtain an electrode film, and the electrode film was dried in a vacuum drying oven at 100°C for 2 h. The electrode film was punched into a disc with a radius of 0.6 mm using a punching machine, and a CR2016 button cell battery was assembled in a glove box by using sodium metal as a counter electrode 1 mol/L NaClO₄EC+DEC (1:1 vol%) +5% FEC as electrolyte, and a PP/PE/PP three-layer separator as a separator.

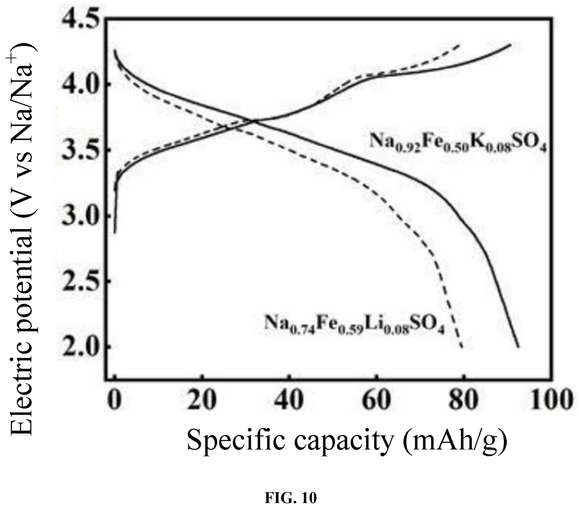

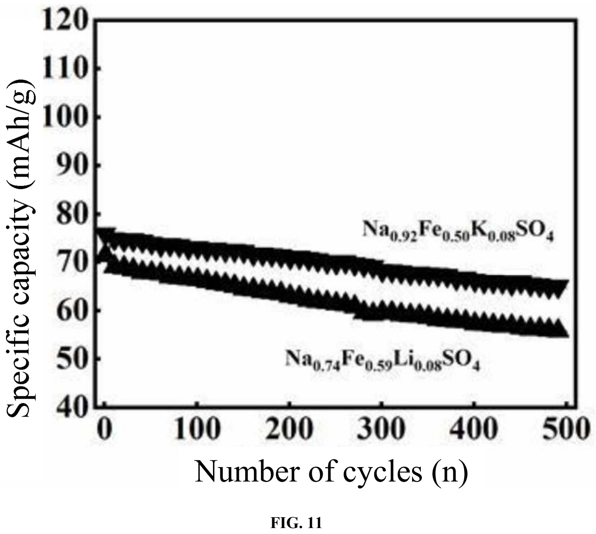

The button cell battery was subjected to a galvanostatic charge-discharge test at a current density of 0.1C (1C=100 mAh/g). FIG. 10 illustrates a first cycle charge-discharge curve of an Na_{0.92}Fe_{0.50}K_{0.08}SO₄ electrode. Within a voltage range of 2.0-4.3 V, the electrode has a reversible specific capacity of 92 mAh/g with an average discharge potential of 3.5V. Both the capacity and potential are lower than those in Example 1, indicating that the presence of impurity phases has an adverse impact on the electrochemical performance of the material. FIG. 11 illustrates cycling stability of an Na_{0.92}Fe_{0.50}K_{0.08}SO₄ electrode. After 500 cycles at a rate of 10C, a capacity retention rate of the electrode is only 85%, indicating that the presence of impurity phases reduces the interfacial stability of the material, and results in severe capacity fading during cycling.

### Comparative Example 2

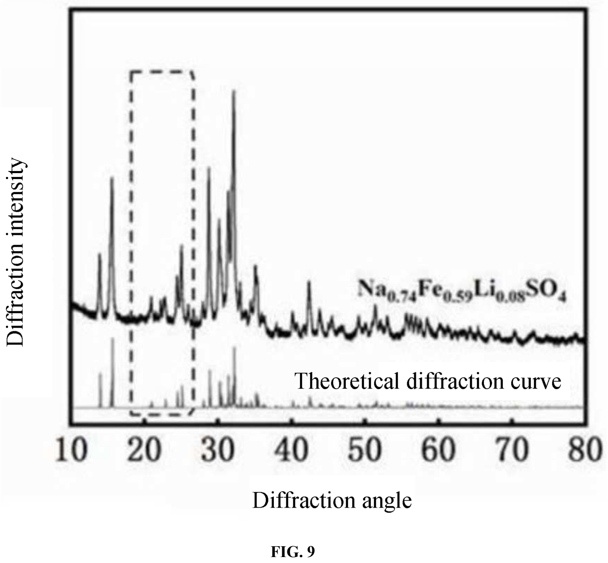

This example involves the synthesis and electrochemical performance of Na_{0.74}Fe_{0.59}Li_{0.08}SO₄, as detailed below:
Sodium sulfate, ferrous sulfate, and lithium sulfate were added to a ball-milling jar at a molar ratio of 0.37:0.59:0.04, KB was used as a carbon source, 20 mL of acetone was taken and poured into the ball-milling jar (under a nitrogen atmosphere), a ball-to-powder ratio was set to 20:1, and the ball milling was performed at a rotation speed of 400 r/min for a total of 7 h, with an interval of 10 min. Finally, the ball-milled precursor was heated in an Ar/H₂ (90:10) atmosphere at a heating rate of 1 °C/min to 100 °C and held for 3 h, followed by heating again at a heating rate of 1 °C/min to 200 °C and held for 3 h, and then further heated at a heating rate of 1 °C/min to 350 °C and maintained at this temperature for 5 h. After cooling to room temperature, the Na_{0.74}Fe_{0.59}Li_{0.08}SO₄ material was obtained. FIG. 9 illustrates an X-ray diffraction (XRD) pattern of Na_{0.74}Fe_{0.59}Li_{0.08}SO₄ powder. Compared with the theoretical diffraction pattern, a significant number of impurity peaks are observed in a 20 range of 20-25°. The peaks are consistent with the diffraction peaks of the Na₆Fe(SO₄)₄ and FeSO₄ impurity phase, indicating an imbalance in the stoichiometric ratios of elements such as Na, Fe, and SO₄. On the one hand, the presence of the impurity phase reduces the proportion of active material, resulting in a lower specific capacity. On the other hand, the presence of impurities is not conducive to diffusion of ion at a material interface, resulting in increased electrode polarization and degraded rate performance.

The Na_{0.74}Fe_{0.59}Li_{0.08}SO₄, AB and PVDF were uniformly mixed in a mass ratio of 7:2:1 to obtain a mixture, the mixture was coated on aluminum foil using a 150 µm four-sided applicator to obtain an electrode film, and the electrode film was dried in a vacuum drying oven at 100°C for 2 h. The electrode film was punched into a disc with a radius of 0.6 mm using a punching machine, and a CR2016 button cell battery was assembled in a glove box by using sodium metal as a counter electrode 1 mol/L NaClO₄EC+DEC (1:1 vol%) +5% FEC as electrolyte, and a PP/PE/PP three-layer separator as a separator.

The button cell battery was subjected to a galvanostatic charge-discharge test at a current density of 0.1C (1C=100 mAh/g). FIG. 10 illustrates a first cycle charge-discharge curve of an Na_{0.74}Fe_{0.59}Li_{0.08}SO₄ electrode. Within a voltage range of 2.0-4.3 V, the electrode has a reversible specific capacity of 80 mAh/g with an average discharge potential of 3.45V. Both the capacity and potential are lower than those in Example 1, indicating that the presence of impurity phases has an adverse impact on the electrochemical performance of the material. FIG. 11 illustrates cycling stability of an Na_{0.74}Fe_{0.59}Li_{0.08}SO₄ electrode. After 500 cycles at a rate of 10C, a capacity retention rate of the electrode is only 78%, indicating that the presence of impurity phases reduces the interfacial stability of the material, and results in severe capacity fading during cycling.

It should be noted and emphasized that although only the cases where M is Fe and A is Na are exemplified in the above embodiments, based on their substantially similar properties, cases where M is Mn, Co, Ni, Cu, and/or Zn, and A is Li and/or K are also expected to exhibit predictable performance and effects, and therefore fall within the scope of the present disclosure.

The embodiments mentioned above are merely several embodiments of the present disclosure, and are specifically described in details, but cannot be interpreted as limiting the scope of the patent for the present disclosure as a result. It shall be noted that for those of ordinarily skilled in the art, they may make several transformations and improvements on the premise without deviating from concepts of the present disclosure, these transformations and improvements should be considered to fall within the protection scope of the present disclosure.

## Claims

1. A pure-phase polyanionic sulfate sodium ion battery positive electrode material, wherein a chemical general formula of the pure-phase polyanionic sulfate sodium ion battery positive electrode material is NaₓM_{y}A_{z}SO₄, wherein M is one or two or more of Mn, Fe, Co, Ni, Cu, and/or Zn, A is one or two or more of Li, K, and/or Na, and value ranges of the variables are: 0.75 ≤ x ≤ 0.85, 0.52 ≤ y ≤ 0.58, 0 < z ≤ 0.1, and x + 2y + z = 2.

2. The pure-phase polyanionic sulfate sodium ion battery positive electrode material of claim 1, wherein a lattice system of the pure-phase polyanionic sulfate sodium ion battery positive electrode material is a triclinic system with a P2₁/c space group.

3. The pure-phase polyanionic sulfate sodium ion battery positive electrode material of claim 2, wherein for site occupation, Na, S, and O occupy 4e sites, and M and A occupy 8f sites; and Na/S-O₄ form tetrahedra, M/A-O₆ form octahedra, and the tetrahedra and the octahedra are interconnected by sharing vertices/faces.

4. The pure-phase polyanionic sulfate sodium ion battery positive electrode material of claim 3, wherein in the triclinic system with a P2₁/c space group, lattice parameters vary within the following ranges: 11.10Å ≤ a ≤ 12.20Å; 11.40Å ≤ b ≤ 12.60Å; 5.20Å ≤ c ≤ 6.90Å; and 910.01Å³≤ V ≤ 940.4Å³.

5. A preparation method for the pure-phase polyanionic sulfate sodium ion battery positive electrode material of claim 1, comprising the following steps: uniformly mixing a sodium source, a metal source, an alkali metal source, an anion source, and a carbon source in stoichiometric ratios to obtain a mixture, sintering the mixture in an inert atmosphere to obtain the pure-phase polyanionic sulfate sodium ion battery positive electrode material.

6. The preparation method for the pure-phase polyanionic sulfate sodium ion battery positive electrode material of claim 5, wherein the sodium source comprises an inorganic sodium source and/or an organic sodium source; the inorganic sodium source is one or two or more of sodium hydroxide, sodium chloride, sodium sulfate, sodium nitrate, and/or sodium carbonate; and the organic sodium source is one or two or more of sodium formate, sodium acetate, sodium ethoxide, and/or sodium benzoate.

7. The preparation method for the pure-phase polyanionic sulfate sodium ion battery positive electrode material of claim 5, wherein the metal source is a manganese source, an iron source, a cobalt source, a nickel source, a copper source, and/or a zinc source;
the manganese source is one or two or more of manganese sulfate, manganese carbonate, manganese chloride, and/or manganese acetate;
the iron source is one or two or more of ferrous sulfate, ferric chloride, ferrous oxide, and/or ferric acetate;
the cobalt source is one or two or more of cobalt sulfate, cobalt nitrate, cobalt chloride, and/or cobalt acetate;
the nickel source is one or two or more of nickel sulfate, nickel nitrate, nickel chloride, and/or nickel acetate;
the copper source is one or two or more of copper sulfate, copper chloride, and/or copper acetate; and
the zinc source is one or two or more of zinc sulfate, zinc chloride, and/or zinc acetate.

8. The preparation method for the pure-phase polyanionic sulfate sodium ion battery positive electrode material of claim 5, wherein
the alkali metal source is a sodium source, a lithium source, and/or a potassium source;
the sodium source comprises an inorganic sodium source and/or an organic sodium source; wherein the inorganic sodium source is one or two or more of sodium hydroxide, sodium chloride, sodium sulfate, sodium nitrate, and/or sodium carbonate; and the organic sodium source is one or two or more of sodium formate, sodium acetate, sodium ethoxide, and/or sodium benzoate;
the lithium source is one or two or more of lithium sulfate, lithium carbonate, and/or lithium hydroxide; and
the potassium source is one or two or more of potassium sulfate, potassium hydroxide, potassium chloride, potassium nitrate, and/or potassium carbonate.

9. The preparation method for the pure-phase polyanionic sulfate sodium ion battery positive electrode material of claim 5, wherein the anion source is one or two or more of sulfuric acid, sodium sulfate, ferrous ammonium sulfate, ferrous sulfate, and/or ammonium sulfate; and
the carbon source is one or two or more of Super P, Ketjen black, carbon nanotubes, graphene, glucose, citric acid, and/or sucrose.

10. The preparation method for the pure-phase polyanionic sulfate sodium ion battery positive electrode material of claim 5, wherein a method for uniformly mixing is a liquid-phase mixing method or a solid-state mixing method; the inert atmosphere is argon, nitrogen, or a mix gas of argon, hydrogen, and nitrogen; and a temperature of sintering is 200°C-400°C.
